# EUROPEAN PATENT SPECIFICATION

(11) **EP 3 610 146 B1**
(45) Date of publication and mention of the grant of the patent: **25.11.2020**
(21) Application number: 17720534.1
(22) Date of filing: 10.04.2017
(51) Int. Cl.: F02D 19/02, F02M 21/02, F02D 41/00, F02M 21/00, F02D 35/02, G01M 15/08

(54) **A CONTROL METHOD FOR AN INTERNAL COMBUSTION ENGINE BASED ON FUEL PROPERTIES, AND AN ENGINE SYSTEM WITH FUEL PROPERTIES ANALYSIS**
STEUERVERFAHREN FÜR EINEN VERBRENNUNGSMOTOR BASIEREND AUF KRAFTSTOFFEIGENSCHAFTEN UND MOTORSYSTEM MIT KRAFTSTOFFEIGENSCHAFTSANALYSE
PROCÉDÉ DE COMMANDE POUR MOTEUR À COMBUSTION INTERNE BASÉ SUR DES PROPRIÉTÉS DE CARBURANT, ET SYSTÈME DE MOTEUR AVEC ANALYSE DE PROPRIÉTÉS DE CARBURANT

(43) Date of publication of application: 19.02.2020
(73) Proprietor: Wärtsilä Finland Oy, 65100 Vaasa (FI)
(72) Inventor: MONNET, Gilles, 65101 Vaasa (FI)
(74) Representative: Boco IP Oy Ab
(86) International application number: PCT/FI2017/050253
(87) International publication number: WO 2018/189412

(56) References cited:
- WO-A1-2009/022595
- DE-T2- 60 210 846
- US-A1- 2005 229 479
- US-B2- 9 441 561

## Description

### FIELD OF THE DISCLOSURE

The present disclosure relates to the control of internal combustion engines, and more particularly to the control of reciprocating internal combustion piston engines capable of using gaseous fuel as main fuel. The present disclosure further concerns a control method for such engines based on fuel properties, and a respective engine system with fuel properties analysis

### BACKGROUND OF THE DISCLOSURE

Internal combustion engines capable of using gaseous fuel as main fuel may often be operated on different types of gaseous fuel, e.g. gases of various compositions. This is due to the fact, that the composition of natural gas varies depending on the deposit from which the gas is recovered from.

Typically, it is the provider of the gaseous fuel that also provides information on the composition of said gas, and the operator of the engine calculates fuel properties based on the given information concerning composition. The calculated fuel properties are then used to adjust engine control parameters so that the engine is better optimized for the fuel composition, and to avoid certain problems, such as knocking.

However, calculating fuel properties for a given composition always results in an estimate, which may vary to some extent from the actual properties of the gaseous fuel. Moreover, filling a gaseous fuel reservoir with various types of gaseous fuel results in a mixture of gaseous fuels, which in turn requires more complex calculations for evaluating the properties of the mixture.

DE 602 10 846 T2 describes a control method according to the preamble of claim 1.

US 2005/229479 A1 describes a method for monitoring the octane number of a fuel using a rapid compression machine.

### BRIEF DESCRIPTION OF THE DISCLOSURE

An object of the present disclosure is to provide a control method for an internal combustion engine and an engine system having an internal combustion engine, such as reciprocating internal combustion piston engine, so as to facilitate adaption between different fuel properties of gaseous fuels having different compositions.

The objects of the disclosure are achieved by a control method and an engine system which are characterized by what is stated in the independent claims. The preferred embodiments of the disclosure are disclosed in the dependent claims.

The disclosure is based on the idea of providing an analysing unit having a rapid compression machine in connection with an internal combustion engine capable of using gaseous fuel as main fuel, and using information provided by the analysing unit to control the engine.

An advantage provided by the disclosure is that information regarding fuel properties of the gaseous fuel actually delivered to the internal combustion engine is readily available for use in controlling said engine.

### BRIEF DESCRIPTION OF THE DRAWINGS

In the following, the disclosure will be described in greater detail by means of preferred embodiments with reference to the accompanying drawings, in which:
Figure 1 is a schematic illustration of an engine system according to an embodiment of the disclosure;
Figure 2 is a schematic illustration of an engine system according to another embodiment of the disclosure, in which fuel and air are delivered via separate lines;
Figure 3 is a schematic illustration of an engine system according to yet another embodiment of the disclosure, in which fuel and air are delivered via separate lines and analysing unit environment conditions are adjusted based on engine environment conditions; and
Figure 4 is a schematic illustration of an engine system according to further embodiment of the disclosure, in which fuel and air are delivered via separate lines, such that air is provided to the analysing unit in a state corresponding to that of air being introduced to a cylinder of an engine.

It should be noted that, for the purpose of clarity, the appended drawings illustrate embodiments of the disclosure in a schematic and simplified manner, and should not thus be interpreted in a restricting manner.

### DETAILED DESCRIPTION OF THE DISCLOSURE

According to a first aspect of the present disclosure, a control method for an internal combustion engine 1 is provided, said control method being based on fuel properties and said engine being capable of using gaseous fuel as main fuel.

In the method, an analysing unit 2 for analysing fuel properties of gaseous fuel is provided. Particularly, the analysing unit 2 comprises a rapid compression machine 2a arranged in fluid communication with a fuel delivery line 4; 4a of the internal combustion engine 1, so as to receive at least gaseous fuel to be analysed. The fuel delivery line 4a may be configured as a gaseous fuel feed line, i.e. delivering only gaseous fuel, in which case air has to be provided separately both for the analysing unit 2 and the internal combustion engine 1. Alternatively, the fuel delivery line 4 may be configured as an intake line, i.e. delivering a combination of gaseous fuel and air to be combusted together in both the analysing unit 2 and the internal combustion engine 1.

The gaseous fuel to be analysed is compressed within a compression chamber 2b of the analysing unit so as to induce said fuel to auto-ignite and combust with air. Moreover, pressure data indicative of fuel properties is obtained from this combustion.

Information indicative of the fuel properties is transmitted to the control device 3, and engine control parameters are controlled at least based on the information indicative of fuel properties. The information indicative of fuel properties could be, for example, pressure data obtained from a pressure sensor 2c, or information derived at least from the pressure data by the analysing unit 2. Examples of such engine control parameters include, but are not limited to, ignition timing, pilot fuel injection timing, pilot fuel injection quantity, fuel/air -ratio, manifold air pressure, valve timing, maximum engine load, and engine speed.

Fuel auto ignition delay properties are determined from the obtained pressure data, and correspondingly, engine control parameters are controlled based at least on the determined fuel auto ignition delay properties. It should be noted, that the fuel auto ignition delay properties may be determined by the analysing unit 2 and transmitted to the control device 3, or alternatively, the fuel auto ignition delay properties may be determined by the control device 3 based on the information transmitted from the analysing unit 2.

According to an embodiment of the first aspect, engine environment condition information is obtained. In the context of this disclosure, the term engine environment condition(s) is used to describe the conditions in which the engine is operated and which affect the operation of the engine. Most suitably, means for obtaining engine environment condition information 1a are provided as conventional sensors typically present in common internal combustion engine systems capable of using gaseous fuel as main fuel. Moreover, respective analysing unit environment conditions are adjusted so as to correspond, or at least more closely to correspond with the obtained engine environment condition information. It should be noted, that although the analysing unit environment conditions may be adjusted to match the engine environment conditions, the analysing unit environment may alternatively be adjusted to correspond to the engine environment condition information according to a pre-determined set of rules, such as a chart, table or map. This has an advantage in that less approximation is needed. One option is to select and adjust he engine environment condition towards a pre-determined environment, which is closest to the engine environment condition information.

Preferably, but not necessarily, said engine environment condition information is indicative of at least one of engine intake air temperature, engine intake air pressure and engine intake air humidity. Correspondingly adjusting analysing unit environment conditions comprises preferably, but not necessarily, adjusting at least one of analysing unit intake air temperature, analysing unit intake air pressure and analysing unit intake air humidity, respectively. For example, intake air temperature can be adjusted with heat exchanger.

According to a further embodiment of the first aspect, the analysing unit 2 is provided with air for combusting with gaseous fuel to be analysed, such that the is provided from an air intake line 4b of the internal combustion engine 1 in a state corresponding to that of air being introduced to a cylinder of said engine. For example, air may be provided to the analysing unit 2 from an air intake line 4b of the internal combustion engine 1 downstream of any air processing equipment, such as a charging device, charge cooler, or both (not illustrated). In such an arrangement, the properties of the air provided to the analysing unit 2 are effectively the same as those of the air provided for the internal combustion engine 1. Correspondingly, environment conditions similar to those of the internal combustion engine 1 are achieved for the analysing unit 2 with minimal or none analysing unit environment conditions adjustments.

According to still another embodiment of the first aspect, compressing the gaseous fuel to be analysed within the compression chamber 2b of analysing unit 2 is actuated by mechanical power or fluid power derived from the engine or peripherals thereof. Alternatively, the compression chamber 2b may be actuated by electrical power derived from a generator attached to the internal combustion engine, or from the grid.

According to a second aspect of the disclosure, an engine system with fuel properties analysis is provided.

The engine system comprises an internal combustion engine 1 capable of using gaseous fuel as main fuel, a fuel delivery line 4; 4a for providing gaseous fuel to the engine, and a control device 3 for controlling engine control parameters of the engine.

The engine system is further equipped with an analysing unit 2 for analysing fuel properties of gaseous fuel. Particularly, the analysing unit 2 comprises a rapid compression machine 2a in fluid communication with the fuel delivery line 4; 4a for receiving at least gaseous fuel to be analysed. The rapid compression machine 2a has a compression chamber 2b arranged to compress, for example with a piston (not shown), said fuel so as to induce said fuel to auto-ignite and combust with air.

The fuel delivery line 4a may be configured as a gaseous fuel feed line, i.e. delivering only gaseous fuel, in which case air has to be provided separately both for the analysing unit 2 and the internal combustion engine 1. Alternatively, the fuel delivery line 4 may be configured as an intake line, i.e. delivering a combination of gaseous fuel and air to be combusted together in both the analysing unit 2 and the internal combustion engine 1. The analysing unit 2 is also equipped with a pressure sensor 2c for obtaining pressure data of a combustion within the compression chamber of the rapid compression machine, said pressure data being indicative of fuel properties. Furthermore, the analysing unit 2 is arranged to transmit information indicative of fuel properties to the control device 3. The information indicative of fuel properties could be, for example, pressure data obtained from the pressure sensors 2c, or information derived at least from the pressure data by the analysing unit 2.

Moreover, the control device 3 is being further arranged to control engine control parameters at least based on said information indicative of fuel properties. Examples of such engine control parameters include, but are not limited to, ignition timing, pilot fuel injection timing, pilot fuel injection quantity, fuel/air -ratio, manifold air pressure, valve timing, maximum engine load, and engine speed.

The control device is further arranged to control engine control parameters based on at least fuel auto ignition delay properties determined from pressure data obtained from the pressure sensor 2c. It should be noted, that the fuel auto ignition delay properties may be determined by the analysing unit 2 and transmitted to the control device 3, or alternatively, the fuel auto ignition delay properties may be determined by the control device 3 based on the information transmitted from the analysing unit 2.

According to an embodiment of the second aspect, the engine system comprises means for obtaining engine environment condition information 1a. Most suitably, means for obtaining engine environment condition information 1a are provided as conventional sensors typically present in common internal combustion engine systems capable of using gaseous fuel as main fuel. Correspondingly, the analysing unit comprises means for adjusting analysing unit environment conditions 2d. Moreover, the means for adjusting analysing unit environment conditions 2d are arranged to adjust analysing unit environment conditions corresponding to engine environment condition information.

Preferably, but not necessarily, said means for obtaining engine environment condition 1a information are arranged to obtain engine environment condition information indicative of at least one of engine intake air temperature, engine intake air pressure and engine intake air humidity. Correspondingly said means for adjusting analysing unit environment conditions 2d are preferably, but not necessarily, arranged to adjust at least one of analysing unit intake air temperature, analysing unit intake air pressure and analysing unit intake air humidity, respectively.

According to a further embodiment of the second aspect, the rapid compression machine 2a is arranged in fluid communication with an air intake line 4b of the internal combustion engine 1 so as to provide air, in a state corresponding to that of air being introduced to a cylinder of said engine, for combustion with the gaseous fuel to be analysed. For example, air may be provided to the analysing unit 2 from an air intake line 4b of the internal combustion engine 1 downstream of any air processing equipment, such as a charging device, charge cooler, or both (not illustrated). In such an arrangement, the properties of the air provided to the analysing unit 2 are effectively the same as those of the air provided for the internal combustion engine 1. Correspondingly, environment conditions similar to those of the internal combustion engine are achieved for the analysing unit with minimal or none analysing unit environment conditions adjustments.

According to still another embodiment of the second aspect, the analysing unit 2 is arranged in power transmission with the engine for actuating the analysing unit 2, i.e. in order to compress fuel in the compression chamber 2b. Most suitably such power transmission is arranged for mechanical power or fluid power derived from the engine, or peripherals thereof. Alternatively, the compression chamber 2b may be actuated by electrical power derived from a generator attached to the internal combustion engine, or from the grid or with air from separate pressurized air vessel/container.

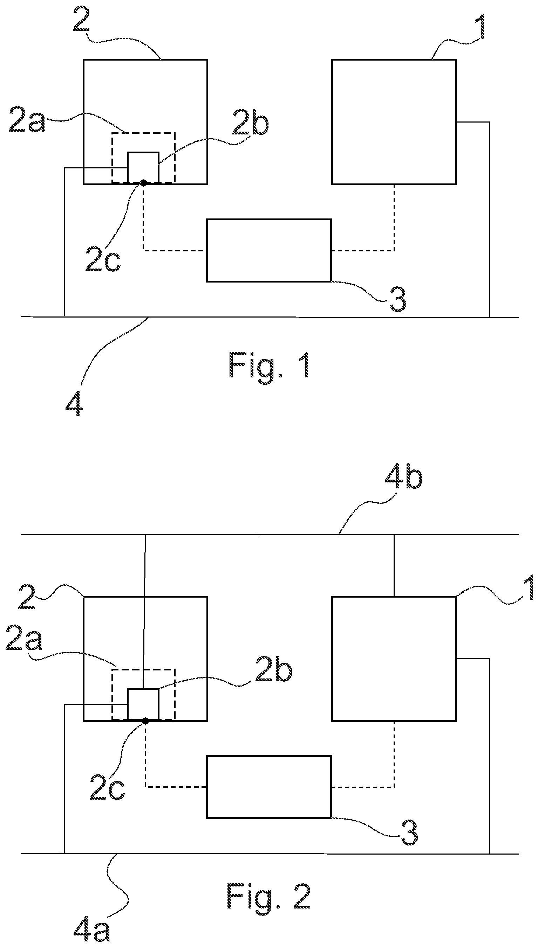

Fig. 1 illustrates schematically an engine system according to an embodiment of the disclosure. An internal combustion engine 1 capable of using gaseous fuel as main fuel is coupled in fluid communication with a fuel delivery line 4 for providing at least gaseous fuel. The engine control parameters of the internal combustion engine 1 are controlled by the control device 3, the communication interface between the engine 1 and the control device 3 being represented as dashed line therebetween. The analysing unit 2 having a rapid compression machine 2a with a compression chamber 2b is also coupled in fluid communication with the fuel delivery line 4 for providing at least gaseous fuel to the compression chamber 2b of the rapid compression machine 2a. As the gaseous fuel to be analysed from the fuel delivery line 4 compressed with air in the compression chamber 2b, it auto-ignites and combusts. The pressure sensor 2c obtains compression data from this combustion and this data is transmitted to the control device 3 via the communication interface represented as a dashed line therebetween. Moreover, as the pressure data is indicative of the fuel properties of the gaseous fuel analysed, this pressure data is utilized by the control device 3 to control the engine control parameters of the engine 1 so as to adapt to the fuel properties of the gaseous fuel.

As discusses earlier, the fuel delivery line 4 may deliver only gaseous fuel, or a combination of gaseous fuel and air to be combusted together in both the analysing unit 2 and the internal combustion engine 1.

Fig. 2 illustrates schematically an engine system according an alternative embodiment of the disclosure, differing from that of Fig. 1 by having the fuel delivery line 4a configured to deliver only gaseous fuel, while a separate air intake line 4b is delivering air for combustion for both the analysing unit 2 and the internal combustion engine 1. It should be noted, that particularly the air received from the air intake line 4b by the internal combustion engine 1 may be further treated by, e.g. a charger and/ or a charge cooler.

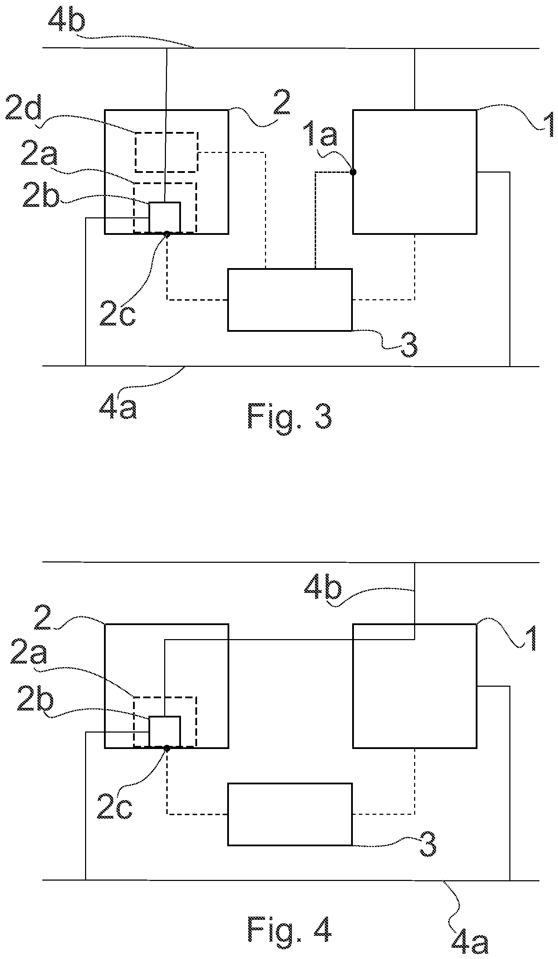

Fig. 3 illustrates an engine system according to a further embodiment of the disclosure. The arrangement of Fig. 3 differs from that of Fig. 2 by having means for obtaining engine environment condition information 1a. Suitably, such means comprise one or more conventional sensors of the internal combustion engine 1 coupled to the control device 3, as illustrated by the dashed line extending therebetween. Moreover, the analysing unit 2 comprises means for adjusting analysing unit environment conditions 2d, also coupled to the control device 3, as illustrated by a dashed line therebetween. Such an arrangement enables that the air provided form the air intake line 4b to the rapid compression machine 2a, via the means for adjusting analysing unit environment conditions 2d, may be adjusted so as to correspond to the air that is delivered to a cylinder of the internal combustion engine, even if air from the air intake line 4b is processed by the internal combustion engine prior to being delivered to the cylinder for combustion.

Fig. 4 illustrates an engine system according to yet another embodiment of the disclosure. Particularly, the arrangement of Fig. 4 differs from that of Fig. 2 in that the rapid compression machine is arranged in fluid communication with an air intake line 4b of the internal combustion engine 1 at a point downstream of any possible processing by the internal combustion engine (such as a charger and/or charge cooler). This arrangement provides the analysing unit 2 with air, for combustion with the gaseous fuel to be analysed, in a state corresponding to that of air being introduced to a cylinder of said engine.

## Claims

1. A control method for an internal combustion engine (1) based on fuel properties, said engine being capable of using gaseous fuel as main fuel, the method comprising the following steps:
- providing an analysing unit (2) for analysing fuel properties of gaseous fuel, **characterized in that** the analysing unit (2) comprises a rapid compression machine (2a), arranged in fluid communication with a fuel delivery line (4; 4a) of the internal combustion engine (1) for receiving at least gaseous fuel to be analysed, wherein the method further comprises the following steps of:
- compressing said fuel within a compression chamber (2b) of the analysing unit so as to induce said fuel to auto-ignite and combust with air;
- obtaining pressure data of said combustion, said pressure data being indicative of fuel auto ignition delay properties;
- determining fuel auto ignition delay properties at least from the obtained pressure data;
- transmitting information indicative of fuel auto ignition delay properties to the control device, and
- controlling engine control parameters at least based on the determined fuel auto ignition delay properties.

2. The control method according to Claim 1, **characterized by**
obtaining engine environment condition information, and
adjusting analysing unit environment conditions corresponding to obtained engine environment condition information.

3. The control method of Claim 2, **characterized in that**
said engine environment condition information is indicative of at least one of engine intake air temperature, engine intake air pressure and engine intake air humidity, and wherein
adjusting analysing unit (2) environment conditions comprises adjusting at least one of analysing unit intake air temperature, analysing unit intake air pressure and analysing unit intake air humidity, respectively.

4. The control method according to any of the preceding Claims 1-3, **characterized by** providing the analysing unit (2) with air for combusting with gaseous fuel to be analysed, said air being provided from an air intake line (4b) of the internal combustion engine (1) in a state corresponding to that of air being introduced to a cylinder of said engine.

5. The control method according to any of the preceding Claims 1-4, **characterized in that** compressing said fuel within the compression chamber (2b) of analysing unit (2) is actuated by mechanical power or fluid power derived from the engine (1) or peripherals thereof.

6. An engine system with fuel properties analysis, comprising:
- an internal combustion engine (1) capable of using gaseous fuel as main fuel;
- a fuel delivery line (4; 4a) for providing gaseous fuel to the engine;
- a control device (3) for controlling engine control parameters of the engine, and
- an analysing unit (2) for analysing fuel properties of gaseous fuel,
**characterized in that** the analysing unit comprises:
- a rapid compression machine (2a) in fluid communication with the fuel delivery line (4; 4a) for receiving at least gaseous fuel to be analysed, the rapid compression machine having a compression chamber (2b) arranged to compress said fuel so as to induce said fuel to auto-ignite and combust with air, and
- a pressure sensor (2c) for obtaining pressure data of a combustion within the compression chamber of the rapid compression machine, said pressure data being indicative of fuel auto ignition delay properties.
the analysing unit (2) being arranged to determine fuel auto ignition delay properties at least from the obtained pressure data and transmit information indicative of fuel auto ignition delay properties to the control device (3), and
the control device (3) being further arranged to control engine control parameters at least based on said information indicative of fuel auto ignition delay properties.

7. The engine system according to Claim 6, **characterized in that**
the system comprises means for obtaining engine environment condition information (1a), and
the analysing unit (2) comprises means for adjusting analysing unit environment conditions (2d), wherein
said means for adjusting analysing unit environment conditions (2d) being arranged to adjust analysing unit environment conditions corresponding to engine environment condition information.

8. The engine system according to Claim 7, **characterized in that**
said means for obtaining engine environment condition (1a) information are arranged to obtain engine environment condition information indicative of at least one of engine intake air temperature, engine intake air pressure and engine intake air humidity, and said means for adjusting analysing unit environment conditions (2d) are arranged to adjust at least one of analysing unit intake air temperature, analysing unit intake air pressure and analysing unit intake air humidity, respectively.

9. The engine system according to any of the preceding Claims 6-8, **characterized in that** the rapid compression machine (2a) is arranged in fluid communication with an air intake line (4b) of the internal combustion engine (1) so as to provide air, in a state corresponding to that of air being introduced to a cylinder of said engine, for combustion with the gaseous fuel to be analysed

10. The engine system according to any of the preceding Claims 6-9, **characterized in that** the analysing unit (2) is in power transmission with the engine (1) so as to actuate the rapid compression machine (2a) by mechanical or fluid power derived from the engine or peripherals thereof in order to compress fuel in the compression chamber (2b).

## Patentansprüche

1. Steuerungsverfahren für einen Verbrennungsmotor (1) anhand von Kraftstoffeigenschaften, wobei der Motor in der Lage ist, als Hauptkraftstoff einen gasförmigen Kraftstoff zu verwenden, wobei das Verfahren die folgenden Schritte umfasst:
- Bereitstellen einer Analyseeinheit (2) zum Analysieren von Kraftstoffeigenschaften eines gasförmigen Kraftstoffs,
**gekennzeichnet dadurch, dass** die Analyseeinheit (2) eine Schnellverdichtungsmaschine (2a) umfasst, die mit einer Kraftstoffzufuhrleitung (4; 4a) des Verbrennungsmotors (1) fluidtechnisch verbunden ist, um zumindest zu analysierenden gasförmigen Kraftstoff aufzunehmen, wobei das Verfahren ferner die folgenden Schritte umfasst:
- Verdichten des Kraftstoffs in einer Verdichtungskammer (2b) der Analyseeinheit, so dass der Kraftstoff dazu angeregt wird, sich selbst zu entzünden und mit Luft zu verbrennen;
- Gewinnen von Druckdaten der Verbrennung, wobei die Druckdaten Kraftstoff-Selbstzündungsverzugseigenschaften anzeigen;
- Bestimmen von Kraftstoff-Selbstzündungsverzugseigenschaften mindestens anhand der gewonnenen Druckdaten;
- Senden von Informationen, die Kraftstoff-Selbstzündungsverzugseigenschaften anzeigen, an die Steuerungsvorrichtung, und
- Steuern von Motorsteuerparametern mindestens anhand der bestimmten Kraftstoff-Selbstzündungsverzugseigenschaften.

2. Steuerungsverfahren nach Anspruch 1, **gekennzeichnet durch** Gewinnen von Informationen über Motorumgebungsbedingungen und
Verstellen von Umgebungsbedingungen der Analyseeinheit entsprechend den gewonnenen Informationen über die Motorumgebungsbedingungen.

3. Steuerungsverfahren nach Anspruch 2, **gekennzeichnet dadurch, dass** die Informationen über die Motorumgebungsbedingungen mindestens eines von Motor-Ansauglufttemperatur, Motor-Ansaugluftdruck und Motor-Ansaugluftfeuchtigkeit anzeigen, und wobei
das Verstellen der Umgebungsbedingungen der Analyseeinheit (2) umfasst, dass mindestens eines von Analyseeinheit-Ansauglufttemperatur, Analyseeinheit-Ansaugluftdruck und Analyseeinheit-Ansaugluftfeuchtigkeit entsprechend verstellt wird.

4. Steuerungsverfahren nach einem der vorhergehenden Ansprüche 1 bis 3, **gekennzeichnet durch** Versorgen der Analyseeinheit (2) mit Luft zur Verbrennung mit einem zu analysierenden gasförmigen Kraftstoff, wobei die Luft in einem Zustand, der dem Zustand der in einen Zylinder des Motors eingetragenen Luft entspricht, aus einer Lufteinlassleitung (4b) des Verbrennungsmotors (1) bereitgestellt wird.

5. Steuerungsverfahren nach einem der vorhergehenden Ansprüche 1 bis 4, **gekennzeichnet dadurch, dass** die Verdichtung des Kraftstoffs in der Verdichtungskammer (2b) der Analyseeinheit (2) durch mechanische Energie oder fluidische Energie, die vom Motor (1) oder von peripheren Elementen des Motors abgeleitet wird, angetrieben wird.

6. Motorsystem mit Kraftstoffeigenschaftsanalyse, umfassend:
- einen Verbrennungsmotor (1), der in der Lage ist, als Hauptkraftstoff einen gasförmigen Kraftstoff zu verwenden;
- eine Kraftstoffzufuhrleitung (4; 4a) zur Zuführung von gasförmigem Kraftstoff zum Motor;
- eine Steuerungsvorrichtung (3) zur Steuerung von Motorsteuerparametern des Motors, und
- eine Analyseeinheit (2) zum Analysieren von Kraftstoffeigenschaften eines gasförmigen Kraftstoffs,
**gekennzeichnet dadurch, dass** die Analyseeinheit umfasst:
- eine Schnellverdichtungsmaschine (2a) in fluidtechnischer Verbindung mit der Kraftstoffzufuhrleitung (4; 4a), um zumindest zu analysierenden gasförmigen Kraftstoff aufzunehmen, wobei die Schnellverdichtungsmaschine eine Verdichtungskammer (2b) aufweist, die dazu eingerichtet ist, den Kraftstoff zu verdichten, um den Kraftstoff anzuregen, sich selbst zu entzünden und mit Luft zu verbrennen, und
- einen Drucksensor (2c) zur Gewinnung von Druckdaten einer Verbrennung in der Verdichtungskammer der Schnellverdichtungsmaschine, wobei die Druckdaten Kraftstoff-Selbstzündungsverzugseigenschaften anzeigen,
wobei die Analyseeinheit (2) dazu eingerichtet ist, Kraftstoff-Selbstzündungsverzugseigenschaften mindestens anhand der gewonnenen Druckdaten zu bestimmen und Informationen, die Kraftstoff-Selbstzündungsverzugseigenschaften anzeigen, an die Steuerungsvorrichtung (3) zu senden, und
wobei die Steuerungsvorrichtung (3) ferner dazu eingerichtet ist, Motorsteuerungsparameter mindestens anhand der die Kraftstoff-Selbstzündungsverzugseigenschaften anzeigenden Informationen zu steuern.

7. Motorsystem nach Anspruch 6, **gekennzeichnet dadurch, dass** das System Mittel zur Gewinnung von Informationen über Motorumgebungsbedingungen (1a) umfasst und
die Analyseeinheit (2) Mittel zum Verstellen der Analyseeinheit-Umgebungsbedingungen (2d) umfasst, wobei
die Mittel zur Einstellung der Analyseeinheit-Umgebungsbedingungen (2d) dazu eingerichtet sind, Umgebungsbedingungen der Analyseeinheit entsprechend den Informationen über die Motorumgebungsbedingungen zu verstellen.

8. Motorsystem nach Anspruch 7, **gekennzeichnet dadurch, dass**
die Mittel zur Gewinnung von Informationen über die Motorumgebungsbedingungen (1a) dazu eingerichtet sind, Informationen über die Motorumgebungsbedingungen zu gewinnen, die mindestens eines von Motor-Ansauglufttemperatur, Motor-Ansaugluftdruck und Motor-Ansaugluftfeuchtigkeit anzeigen, und
die Mittel zur Einstellung der Analyseeinheit-Umgebungsbedingungen (2d) dazu eingerichtet sind, mindestens eines von Analyseeinheit-Ansauglufttemperatur, Analyseeinheit-Ansaugluftdruck und Analyseeinheit-Ansaugluftfeuchtigkeit entsprechend zu verstellen.

9. Motorsystem nach einem der vorhergehenden Ansprüche 6 bis 8, **gekennzeichnet dadurch, dass** die Schnellverdichtungsmaschine (2a) in fluidtechnischer Verbindung mit einer Lufteinlassleitung (4b) des Verbrennungsmotors (1) eingerichtet ist, um Luft in einem Zustand, der dem Zustand der in einen Zylinder des Motors eingetragenen Luft entspricht, für die Verbrennung mit dem zu analysierenden gasförmigen Kraftstoff bereitzustellen.

10. Motorsystem nach einem der vorhergehenden Ansprüche 6 bis 9, **gekennzeichnet dadurch, dass** die Analyseeinheit (2) sich in Kraftübertragung mit dem Motor (1) befindet, um die Schnellverdichtungsmaschine (2a) durch vom Motor oder von peripheren Elementen des Motors abgeleitete mechanische oder fluidische Energie anzutreiben, um Kraftstoff in der Verdichtungskammer (2b) zu verdichten.

## Revendications

1. Procédé de contrôle pour un moteur à combustion interne (1) sur la base de propriétés de carburant, ledit moteur étant capable d'utiliser un carburant gazeux en tant que carburant principal, ledit procédé comprenant les étapes suivantes consistant à :
- fournir une unité d'analyse (2) pour analyser des propriétés de carburant d'un carburant gazeux,
**caractérisé en ce que** l'unité d'analyse (2) comprend une machine à compression rapide (2a) disposée en communication fluidique avec une conduite d'amenée de carburant (4 ; 4a) du moteur à combustion interne (1) pour recevoir au moins du carburant gazeux à analyser, ledit procédé comprenant également les étapes suivantes consistant à :
- comprimer ledit carburant dans une chambre de compression (2b) de l'unité d'analyse de manière à induire le carburant à l'autoallumage et à la combustion avec de l'air ;
- obtenir des données de pression de ladite combustion, lesdites données de compression indiquant des propriétés de retard d'autoallumage de carburant ;
- déterminer les propriétés de retard d'autoallumage de carburant au moins à partir des données de pression obtenues ;
- transmettre au dispositif de contrôle des informations indiquant des propriétés de retard d'autoallumage de carburant, et
- réguler les paramètres de contrôle de moteur au moins sur la base des propriétés de retard d'autoallumage de carburant déterminées.

2. Procédé de contrôle selon la revendication 1, **caractérisé par** les étapes consistant à
obtenir des informations relatives aux conditions d'environnement du moteur, et varier les conditions d'environnement de l'unité d'analyse selon les informations obtenues sur les conditions d'environnement du moteur.

3. Procédé de contrôle selon la revendication 2, **caractérisé en ce que**
les informations relatives aux conditions d'environnement du moteur indiquent au moins l'une parmi la température d'air d'admission du moteur, la pression d'air d'admission du moteur et l'humidité d'air d'admission du moteur, et dans lequel la variation des conditions d'environnement de l'unité d'analyse (2) comprend au moins l'une parmi la température d'air d'admission de l'unité d'analyse, la pression d'air d'admission de l'unité d'analyse et l'humidité d'air d'admission de l'unité d'analyse, respectivement.

4. Procédé de contrôle selon l'une des revendications précédentes 1 à 3, **caractérisé par** l'étape consistant à alimenter l'unité d'analyse (2) en air pour la combustion avec un carburant gazeux à analyser, ledit air étant fourni par une conduite d'admission d'air (4b) du moteur à combustion interne (1) en un état correspondant à celui de l'air introduit dans un cylindre dudit moteur.

5. Procédé de contrôle selon l'une des revendications précédentes 1 à 4, **caractérisé en ce que** la compression dudit carburant à l'intérieur de la chambre de compression (2b) de l'unité d'analyse (2) est effectuée par une énergie mécanique ou une énergie fluidique dérivée du moteur (1) ou des périphériques de celui-ci.

6. Système de moteur avec analyse des propriétés de carburant, comprenant :
- un moteur à combustion interne (1) capable d'utiliser un carburant gazeux en tant que carburant principal ;
- une conduite d'amenée de carburant (4 ; 4a) pour fournir un carburant gazeux au moteur ;
- un dispositif de contrôle (3) pour réguler des paramètres de contrôle de moteur dudit moteur, et
- une unité d'analyse (2) pour analyser des propriétés de carburant d'un carburant gazeux,
**caractérisé en ce que** l'unité d'analyse comprend :
- une machine à compression rapide (2a) en communication fluidique avec la conduite d'amenée de carburant (4 ; 4a) pour recevoir au moins du carburant gazeux à analyser, ladite machine à compression rapide comprenant une chambre de compression (2b) agencée pour comprimer ledit carburant de manière à induire ledit carburant à l'autoallumage et à la combustion avec de l'air ; et
- un capteur de pression (2c) pour obtenir des données de pression d'une combustion à l'intérieur de la chambre de compression de la machine à compression rapide, lesdites données de pression indiquant des propriétés de retard d'autoallumage de carburant,
ladite unité d'analyse (2) étant agencée pour déterminer les propriétés de retard d'autoallumage de carburant au moins à partir des données de pression obtenues et transmettre au dispositif de contrôle (3) des informations indiquant des propriétés de retard d'autoallumage de carburant, et
ledit dispositif de contrôle (3) étant également agencé pour réguler des paramètres de contrôle de moteur au moins sur la base desdites informations indiquant des propriétés de retard d'autoallumage de carburant.

7. Système de moteur selon la revendication 6, **caractérisé en ce que**
le système comprend des moyens pour obtenir des informations relatives aux conditions d'environnement (1a) du moteur, et
l'unité d'analyse (2) comprend des moyens pour varier des conditions d'environnement (2d) de l'unité d'analyse,
lesdits moyens pour varier les conditions d'environnement (2d) de l'unité d'analyse étant agencés pour varier des conditions d'environnement de l'unité d'analyse selon les informations relatives aux conditions d'environnement du moteur.

8. Système de moteur selon la revendication 7, **caractérisé en ce que**
lesdits moyens pour obtenir des informations relatives aux conditions d'environnement (1 a) du moteur sont agencés pour obtenir des informations relatives aux conditions d'environnement du moteur indiquant au moins l'une parmi la température d'air d'admission du moteur, la pression d'air d'admission du moteur et l'humidité d'air d'admission du moteur, et
lesdits moyens pour varier les conditions d'environnement (2d) de l'unité d'analyse sont agencés pour varier, respectivement, au moins l'une parmi la température d'air d'admission de l'unité d'analyse, la pression d'air d'admission de l'unité d'analyse et l'humidité d'air d'admission de l'unité d'analyse.

9. Système de moteur selon l'une des revendications précédentes 6 à 8, **caractérisé en ce que** la machine à compression rapide (2a) est agencée en communication fluidique avec une conduite d'admission d'air (4b) du moteur à combustion interne (1) pour fournir de l'air, en un état correspondant à celui de l'air introduit dans un cylindre dudit moteur, pour la combustion avec le carburant gazeux à analyser.

10. Système de moteur selon l'une des revendications précédentes 6 à 9, **caractérisé en ce que** l'unité d'analyse (2) est en transmission énergétique avec le moteur (1) de manière à opérer la machine à compression rapide (2) par une énergie mécanique ou fluidique dérivée du moteur ou des périphériques de celui-ci afin de comprimer le carburant dans la chambre de compression (2b).
